Europäisches Patentamt

European Patent Office

Office européen des brevets

(11) Publication number: **0 272 822 B1**

# EUROPEAN PATENT SPECIFICATION

(45) Date of publication of patent specification: **20.03.91**

(51) Int. Cl.⁵: **B64D 27/00, B64D 35/04, B64D 35/08**

(21) Application number: **87310618.1**

(22) Date of filing: **02.12.87**

(54) Aircraft propulsion.

(30) Priority: **03.12.86 GB 8628886**
**05.06.87 GB 8713258**

(43) Date of publication of application:
**29.06.88 Bulletin 88/26**

(45) Publication of the grant of the patent:
**20.03.91 Bulletin 91/12**

(84) Designated Contracting States:
**DE ES FR IT NL SE**

(56) References cited:
**BE-A- 462 056**
**DE-A- 2 119 288**
**FR-A- 875 647**
**US-A- 3 409 249**

(73) Proprietor: **SHORT BROTHERS PLC**
**P.O.Box 241 Airport Road**
**Belfast BT3 9DZ, Northern Ireland(GB)**

(72) Inventor: **Wilson, Michael Anthony**
**Walcombe Slade 11 Circular Road East**
**Cultra Holywood Northern Ireland(GB)**

(74) Representative: **Moon, Donald Keith et al**
**BREWER & SON Quality House Quality Court**
**Chancery Lane**
**London WC2A 1HT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

AIRCRAFT PROPULSION

The present invention relates to aircraft propulsion and is particularly concerned with a propulsion system which employs thrust generating propellers for propulsion of the aircraft.

For many years it has been customary to make use of turbofan engines for most long haul commercial aircraft and the majority of combat aircraft. Turboprop engines have normally been used for light commuter and business aircraft and special purpose aircraft, such as freighters, where there use is more economic. Interest is however now developing for the replacement of turbofan engines by propfan engines for commercial long haul aircraft and there is also a continuing requirement for medium to short haul and special purpose turboprop powered aircraft where the turboprop engine can be used with great efficiency and low operating costs.

While propeller driven aircraft have of course been the subject of considerable early development especially in the years of aviation prior to the introduction of the turbojet and turbofan engines and while a very large number of proposals have been made for the mounting of the engines and the thrust-generating propellers which they drive, most proposals have set out to achieve specific advantages usually at the expense of introducing some disadvantages.

In particular, various proposals have been made for introducing a propulsion system which will drive one or more propellers mounted at the rear end of the fuselage. For example, some 40 years ago, McDonnell Douglas developed a prototype aircraft known as the XB-42A Mixmaster, which derived its thrust from contra-rotating propellers mounted on the tail end of the fuselage and driven by two piston engines mounted within the fuselage at the forward end of the fuselage. The drive from the front mounted engines to the rear mounted propellers would clearly have given rise to design problems and the aircraft was not brought into production following loss of one of the two prototypes built.

It has furthermore been proposed, as disclosed in UK Patent Specification No 1239629, to mount a propeller on a vertical stabiliser fin on the rear of the fuselage of an aircraft forward of the leading edge of the fin and to provide a drive to the propeller from one or more engines mounted within the fuselage, with the aim of improving protection of the engine or engines against impact from external bodies and for satisfying certain aerodynamic requirements. Where two engines are employed they are however connected to a common drive to a single propeller.

In a further arrangement hitherto proposed, as disclosed in UK Specification No 2120623A, two turboprop engines operating independently of each other are housed in lateral enlargements of the fuselage at the rear end thereof where they are arranged to drive individual laterally spaced propellers mounted at the rear of the fuselage enlargements, with the aim of providing two propulsion units which operate independently of each other to provide security in the event of failure of one of them and also to improve aerodynamic flow conditions. The proposal, however, in attempting to introduce these advantages gives rise to the disadvantages that the fuselage is widened at the rear end for placement of the two engines and for the the mounting of the two propellers and that limitations are imposed on propeller diameter due to the proximity of approach of the blades of the two propellers, which it is suggested can be partially overcome by offsetting the planes of rotation of the two propellers.

In yet another proposal, as described in UK Patent Specification No. 605638, two engines are provided, which are mounted within fuselage of the aircraft at the front end thereof and which serve to drive propellers placed one behind the other on the nose of the fuselage. A third engine is disposed in the fuselage at the rear end thereof and serves to drive a single propeller mounted on the rear end of the fuselage. The proposal is said to achieve certain advantages in regard to correct trimming of the aircraft but introduces the disadvantage of mounting propellers on the front of the fuselage where they give rise to adverse air flow conditions over the fuselage and the wings of the aircraft.

In still yet another proposal, as disclosed in German Patent Specification DE 3347679A1 and corresponding US Patent Specification No 4676459, two coaxial propellers are mounted on the forward end of an aircraft body with the upstream propeller being carried by a central propeller shaft driven from a first drive mechanism and with the downstream propeller carried by a hollow shaft concentric with the central shaft and driven from a second drive mechanism. Both drive mechanisms are located in the body of the aircraft in the forward region thereof and are arranged to impart to one propeller a rotation in the same direction as that imparted to the other propeller. The noise generated by contra-rotating propellers is discussed and a reduction in noise is said to be achieved by arranging for the two propellers to rotate in the same direction and for the drives to the two propeller to be interconnected by a releasable clutch which is effective to maintain the blades of the upstream propeller lagging those of the downstream propeller by a predetermined angle.

The disadvantage of employing two drive mechanisms to operate on a common drive to a single propeller is also discussed and the clutch is made releasable in the event of failure of one drive so that the other drive mechanism with its associated propeller can continue to operate, thereby contributing to operating safety. The coaxial propeller arrangement as described can, it is suggested, take the form of a turbine requiring stationary fins between the two propellers and a shroud enclosing the propellers.

In a further proposal disclosed in BE-A-462056 an aircraft is provided with a central cabin pod supported by wings carrying rearwardly extending port and starboard hulls within which are mounted port and starboard engines driving co-axial propellers which are mounted on the rear of the central cabin pod and which are driven through independent transmissions and concentric drive shafts. There is however the disadvantage that a failure of one of the drive shafts would lead to a failure in the other drive shaft.

In yet a further proposal disclosed in DE-A-2119288 a shrouded propeller thrust installation is contained within the contour of a fuselage toward the rear and comprises first and second engines driving through separate drive trains opposed coaxial first and second air screws contained within a shroud which receives intake air from openings in the side of the fuselage. The installation however has the disadvantage of requiring an unconventional skeletal fuselage construction to provide ducted air for propeller thrust.

In yet a further proposal disclosed in FR-A-875647 two engines are arranged one following the other within the fuselage of an aircraft, to the rear of the cabins provided in the front of the fuselage and drive through a common drive trains one or two propellers disposed to the rear of the tail unit of the fuselage. There is however the disadvantage that the engines drive the propeller or propellers through a common drive shaft and that a drive shaft failure would lead to complete loss of thrust.

In still yet another proposal disclosed in US-A-3409249 coaxial helicopter rotors are driven by concentric inner and outer drive shafts driven from a common drive train drivably connected to a single engine. The proposal has however the disadvantage that failure of the engine or the common drive train to the drive shafts would result in a complete loss of thrust.

With current interest being maintained in the use of propulsion units utilising thrust generating propellers, a need clearly arises for an aircraft propulsion system which embodies all or most of the advantages of the prior proposals and the least number of their disadvantages.

According to the present invention there is provided a propulsion system for an aircraft having a fuselage and lift generating surfaces, wherein the system comprises coaxial first and second propellers mounted for rotation on the rear end of the fuselage, an inner propeller drive shaft on which the first propeller is mounted, and a hollow outer propeller drive shaft on which the second propeller is mounted and through which the inner drive shaft passes in concentric relation therewith, first and second engines, a first drive train which transmits drive from the first engine to the inner propeller drive shaft to produce rotation of the first propeller and a second drive train which transmits drive from the second engine to the outer propeller drive shaft to produce rotation of the second propeller, each drive train having no drive connection or engageable drive connection with the other drive train whereby the drive transmitted by each drive train is unaffected by the drive or absence of drive in the other drive train, characterised in that the first and second engines are mounted side-by-side or one above the other within the fuselage at the rear end thereof, each drive train is segregated from the other drive train to protect each drive train from damage in the event of failure of the other drive train, and the system further comprises an inner drive shaft support structure which rotatably supports the inner propeller drive shaft and which extends between the hollow outer propeller drive shaft and the inner propeller drive shaft to protect each drive shaft from damage in the event of a failure of the other drive shaft, and an outer drive shaft support structure which rotatably supports the outer propeller drive shaft independently of the inner propeller drive shaft and the inner drive shaft support structure.

Preferably, the inner drive shaft support structure comprises a sleeve which extends concentrically within the hollow outer drive shaft to a rear end thereof and bearings are provided on the sleeve at the rear end thereof rotatably to support the rearward end of the inner drive shaft. The inner drive shaft support structure may then include further bearings which support the forward end of the inner drive shaft.

The outer drive shaft support structure may include an outer sleeve through which the outer drive shaft passes and which carries spaced forward and rearward bearings for support of the outer drive shaft.

In the embodiment of the invention hereinafter to be described the engines are mounted side-by-side. They may however, if desired, be mounted one above the other.

One embodiment of the invention will now be desribed by way of example with reference to the accompanying drawings in which:-

Fig 1 is a schematic perspective view of an aircraft provided with a propulsion system according to the invention,

Fig 2 is a schematic side elevation of a rear portion of the fuselage of the aircraft shown Fig 1, showing diagrammatically the disposition of the engines, the gear box assembly and the propellers of the propulsion system according to the invention,

Fig 3 is a schematic plan view from above of the aircraft fuselage rear portion shown in Fig 2, with some parts removed for clarity, showing the side-by-side arrangement of the two engines of the propulsion system and their interconnection with the gear box assembly.

Fig 4 is a schematic section of the fuselage rear portion shown in Fig 2, looking aft and taken on the line IV - IV in Fig 2.

Fig 5 is a schematic section of the fuselage rear portion shown in Fig 2, looking aft and taken on the line V - V in Fig 2,

Fig 6 is a schematic plan view of a part of the propulsion system shown in Figs 1 to 5, illustrating diagrammatically the rearmost parts of the two engines, the gear box assembly and the two propeller drive shafts of the propulsion system according to the invention, and

Fig 7 is a schematic plan view drawn to an enlarged scale of the rearmost part of the gear box assembly, the two propeller drive shafts and the two propellers of the propulsion system according to the invention.

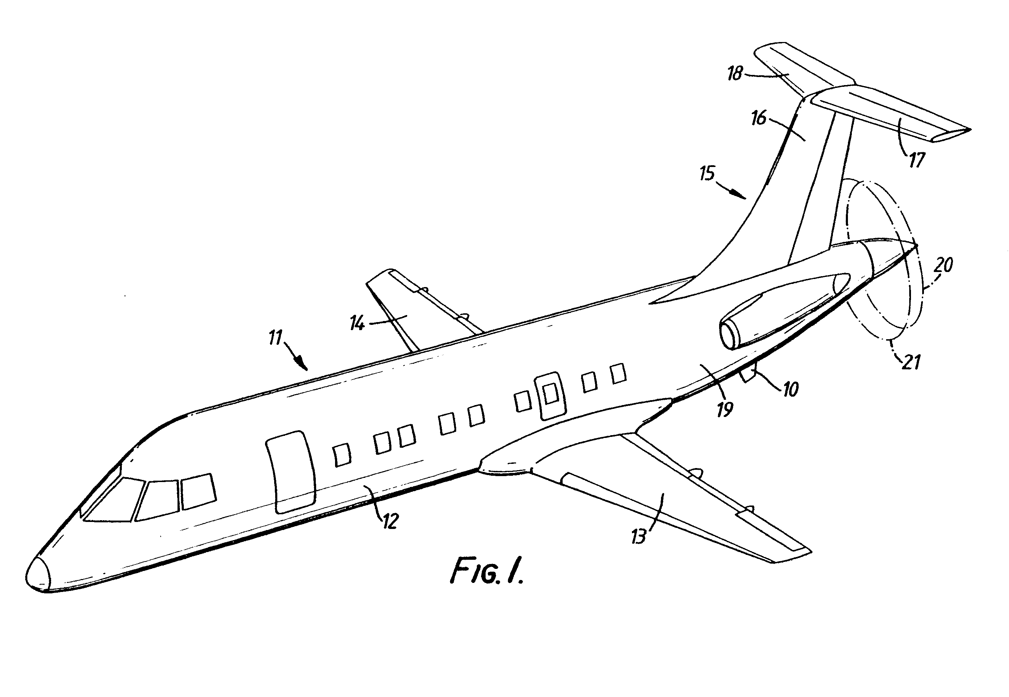

Referring first to Fig 1, an aircraft 11, which is provided with a propulsion system according to the invention, includes a fuselage 12, lift generating wings 13 and 14, and a tail unit 15 having a vertical stabilising fin 16 and horizontal stabiliser components 17 and 18. The propulsion system of the aircraft 11 is located in a rear portion 19 of the fuselage 12 and provides thrust for the aircraft from two contra-rotating propellers 20 and 21 mounted on the tail end of the rear portion 19 of the fuselage 12. The aircraft 11 has conventional retractable landing gear (not shown) and a tail bumper 10 is provided which extends downwardly from the rear portion 19 of the fuselage to prevent contact between the propellers 20 and 21 and the ground during landing or take off.

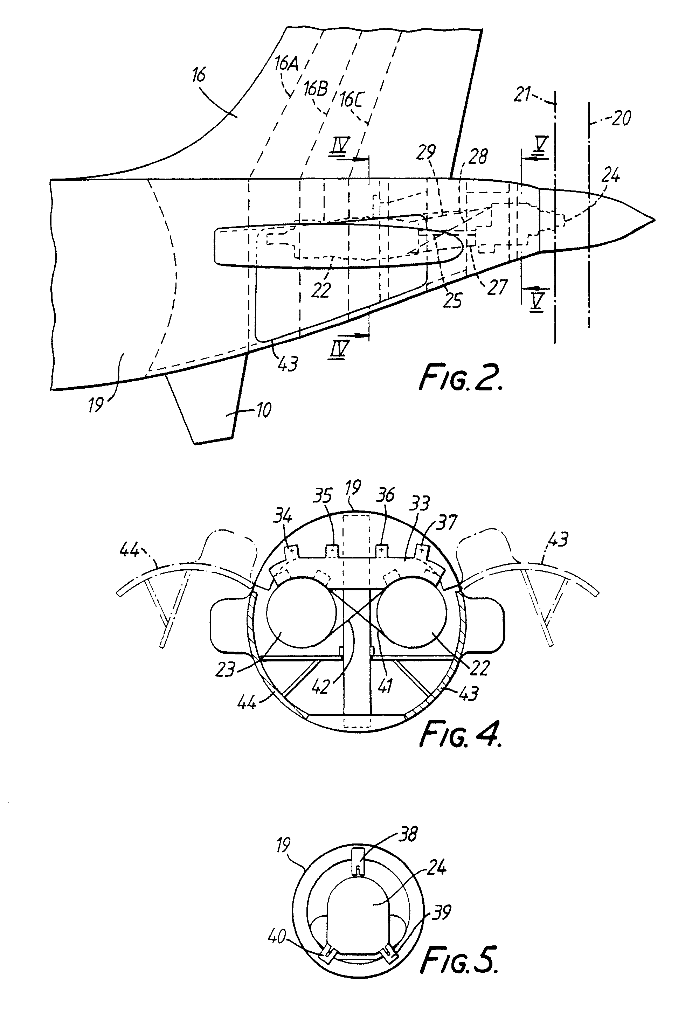

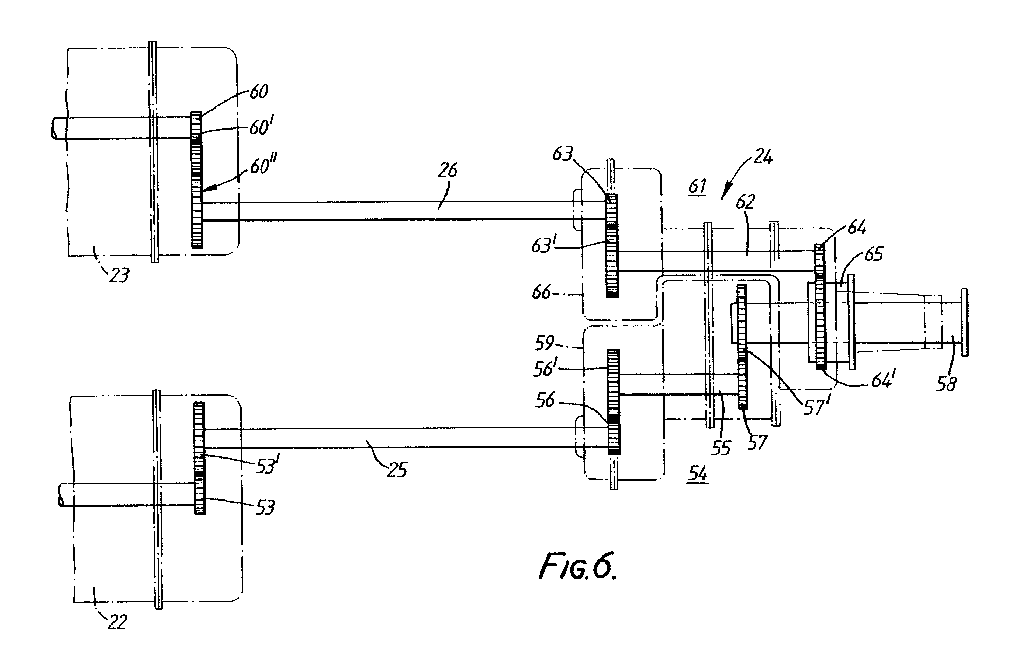

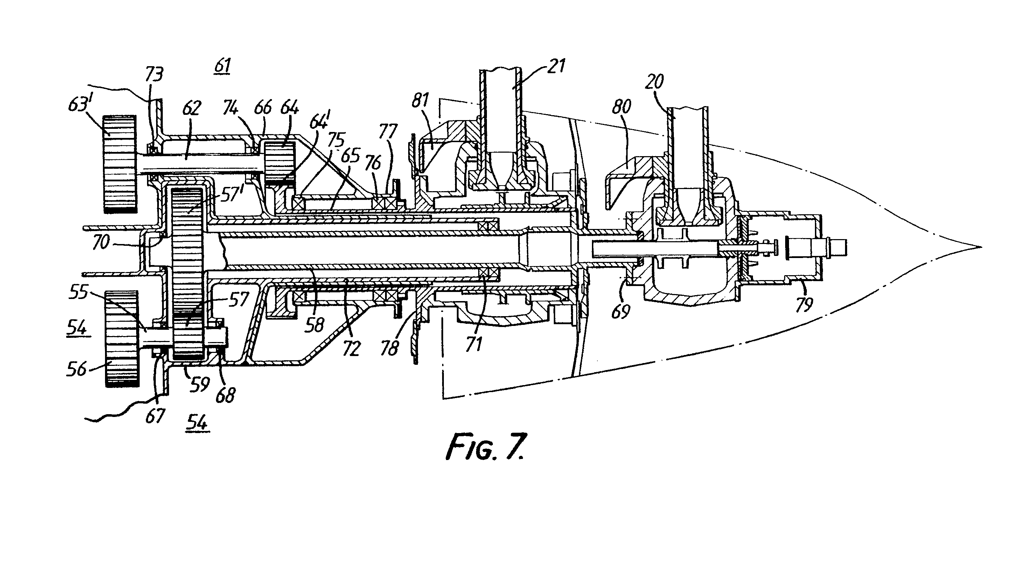

Referring now to Figs 2 to 5, the propulsion system for the aircraft 11 further includes two gas turbine aero-engines 22 and 23, which are mounted side-by-side within the fuselage and which are arranged independently to drive the two coaxially mounted propellers 20 and 21 through transmission shafts 25 and 26 and individual drive trains of a gear box assembly 24, as hereinafter to be more fully described with reference to Figs 6 and 7.

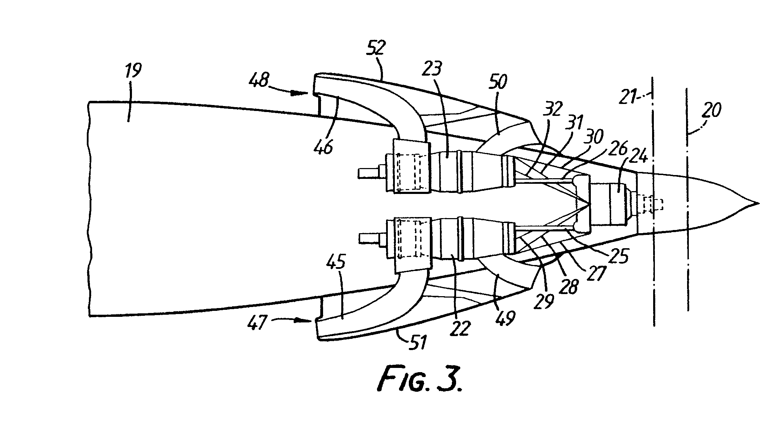

The aero-engines 22 and 23 are rigidly interconnected with the gear box assembly 24 by struts 27 to 32 and are, as best seen in Fig 4, carried on the underside of a cradle 33 which is secured to the fuselage structure using four shock absorbing mounts 34 to 37. The gear box assembly 24 is, as shown in Fig 5, supported directly by the fuselage structure using shock absorbing rubber mounts 38 to 40.

Impact absorbing structures 41 and 42 are provided between the two engines 22 and 23 to protect each engine from damage caused by failure of the other engine. The vertical stabiliser fin 16 is furthermore so designed and constructed as to withstand damage which could be caused by debris following engine failure. To this end the stabiliser fin 16 carries three main spars 16A, 16B and 16C which are so disposed as to ensure that in the event of engine failure the likelihood of severance of the foremost spar 16A is extremely remote.

The aero-engines 22 and 23 are removable from the cradle 33 and from the struts 27 to 32 so that they can be removed from the aircraft. Doors 43 and 44 are provided to allow for the removal of the aero-engines for the purposes of maintenance or replacement, and to allow access to them for purposes other than removal.

As best seen in Fig. 3, two ducts 45 and 46, which are open at their forward ends, direct air from intakes 47 and 48 to the engines 22 and 23. The two ducts 45 and 46 are independent of each other so that failure or blockage of one will not affect the other. Exhaust from the aero-engines 22 and 23 is directed out of the aircraft fuselage 11 by exhaust ducts 49 and 50. Airflow over the air intakes 47 and 48 and over the exhaust ducts 49 and 50 is smoothed by fairings 51 and 52.

Referring now to Fig. 6, the engine 22 imparts drive to its associated propeller through a drive train comprising engine gearing 53,53′, transmission shaft 25 and a gearbox 54 which includes an intermediate shaft 55 driven by reduction gearing 56,56′ and coupled to drive through further reduction gearing 57,57′ a propeller drive shaft 58, upon which the propeller 20 is mounted. As shown schematically in Fig. 6, the gearbox 54 includes a housing 59 which completely encloses the reduction gearing 56,56′, the intermediate shaft 55, the reduction gearing 57,57′ and the forward end of the propeller drive shaft 58. The engine 23 likewise imparts drive to its associated propeller through a drive train comprising engine gearing 60,60′,60″, transmission shaft 26 and a gearbox 61 which includes an intermediate shaft 62 driven by reduction gearing 63,63′ and coupled to drive through reduction gearing 64,64′ a hollow propeller drive shaft 65 upon which the propeller 21 is mounted. The gearbox 61 likewise includes a housing 66 which encloses the reduction gearing 63,63′, inter-

mediate shaft 62, the reduction gearing 64,64' and the forward end of the propeller drive shaft 65.

The engine gearing 60,60',60" of the engine 23 includes a reversing idler gear 60' additional to that of the engine gearing 53,53' of the engine 22 to cause the propeller drive shaft 65 and the propeller 21 which it supports to rotate in a direction opposite to that of the propeller drive shaft 58 and its propeller 20. It will however be appreciated that contra-rotation of the propellers 20 and 21 could be achieved in other ways.

Turning now to Fig. 7, the intermediate shaft 55 of the gearbox 54 is journalled as shown in bearings 67 and 68 mounted on suitable projections of the casing 59 of the gearbox 54. The propeller drive shaft 58 is journalled, as shown, at its foremost end in bearings 70 which are mounted on suitable projections of the casing 59 and at its rear end in bearings 71 mounted inside and at the rearmost end of a cylindrical support sleeve 72 which forms part of and extends rearwardly from the gearbox casing 59. The propeller drive shaft 58 at its rearmost end supports the propeller 20 which is secured to end flange 69 on the shaft 58 by bolts or other means.

The intermediate shaft 62 of the gearbox 61 is likewise journalled in spaced bearings 73 and 74 mounted on suitable projections of the casing 66 of the gearbox 61. The propeller drive shaft 65 is journalled in bearings 75 and 76 located within and at opposite ends of a support sleeve 77 which forms part of gearbox casing 66. The propeller drive shaft 65 at its rearmost end supports the propeller 21, which is secured to flange 78 by bolts or other means.

The support sleeve 72 is interposed between the shafts 58 and 65 both to support the shaft 58 and to protect each of the shafts 58 and 65 and their associated propellers 20 and 21 in the event of failure of the other shaft and propeller.

The pitch of each of the propellers 20 and 21 is varied hydraulically, independently of the pitch of the other propeller, either by the pilot or by automatic means. The pitch change of the propeller 20 is effected by a known pitch change mechanism 79 in conjunction with counter balances 80, the pitch change mechanism 79 being supplied with operating fluid through ducting (not shown) in the shaft 58. The pitch change of the propeller 21 is likewise effected by a known pitch change mechanism (not shown) in conjunction with counter balances 81, the pitch change mechanism being supplied with operating fluid through apertures (not shown) in the casing 66, in the propeller drive shaft 65, and between the shaft 65 and the support sleeve 72.

Several of the many advantages to be gained from the use of rear-mounted coaxial propellers and rear-mounted engines buried in the fuselage, as hereinbefore described with reference to the drawings, are:-

1) Wing lift efficiency is improved by the absence of interference effects between the engine nacelles and/or propeller slipstream and the wings and by a clean uninterrupted airflow over the wings and control surfaces.

2) Aircraft interior noise due to engines and propellers can be made up of two components: one of these components is transmitted directly through the aircraft structure, the other, more dominant component, is, in the case of wing mounted engines, transmitted to the fuselage side through the air. Relocation of the engines and propellers to the rear of the aircraft reduces the first component, eliminates the second and so greatly reduces cockpit and cabin noise.

3) The provision of engines buried in the rear of the fuselage of the aircraft gives rise to favourable drag reduction when compared with the external engines and associated nacelles of conventional propeller driven aircraft, and allows more optimum nose fuselage streamlining when compared with nose mounted engines.

4) The additional drag associated with components of the aircraft located within the slipstream of nose mounted engines is eliminated with rear mounted engines buried within the fuselage.

5) Propeller inflow minimises flow separation on the rear fuselage at all power settings and so reduces the drag associated with such separation.

6) Single engine take-off and climb performance, and hence critical operating flight margins, are improved over wing or nose mounted configurations by:-
i) minimum asymmetric flight control requirements in roll and yaw axes.
ii) inherent single-engine handling safety and reduced critical control forces.

7) Improved landing performance is achieved by:-
i) increased propeller drag (lower propeller pitch and engine flight idle fuel setting) in landing flare from 50 ft. screen to touch down without any impact on the aircraft handling characteristics.
ii) reduced landing ground run as maximum reverse thrust can be used and is not limited by asymmetric or directional stability effects on the aircraft.

8) Simplified accelerate-stop procedure due to the absence of critical "engine-cut" asymmetric condition or directional stability effects and associated control problems.

9) More efficient loiter and long range cruise capability: the combination of one engine set at flight idle and the other at power for level flight gives a reduced fuel burn over the conventional twin engine situations where both engines are operating at reduced power and hence at lower efficiency. The absence of adverse slipstream effects as stated in sub-para. 4) is of further advantage in this respect.

As a result of all the above factors, the aircraft provided with a propulsion system according to the invention requires less fuel and hence, through the "knock-on" effect of weight saving, reduced wing area, lighter landing gear and smaller engines are required giving an overall more efficient design. For passenger carrying aircraft there is a reduced operating empty weight per passenger, and improved payload-range capability and an anticipated reduction in overall direct operating costs of up to 25% per seat mile compared to other aircraft with the same seating capacity.

In the embodiment of the invention hereinbefore described with reference to the drawings, two engines are mounted in the rear of the fuselage for driving two coaxial propellers mounted on the rear end of the fuselage. While this configuration can be regarded as achieving all the above-mentioned advantages and avoiding the disadvantages, it will be apparent that more than two engines mounted within the rear of the fuselage can if desired be employed for driving the two coaxial propellers or an additional propeller or propellers. Furthermore, where additional power is required for example for take-off and climb to cruising height an additional engine or engines may be provided, which may take the form of one or more externally mounted turbofans, turboprops or propfans.

It will be apparent that the present invention provides in an aircraft having a fuselage and lift-generating surfaces, a propulsion system which embodies all or most of the advantages of the prior proposals hereinbefore referred to and few of their disadvantages. Furthermore, it provides a propulsion system which offers additional advantages not found in the prior proposals.

## Claims

1. A propulsion system for an aircraft having a fuselage and lift generating surfaces, wherein the system comprises coaxial first and second propellers (20,21) mounted for rotation on the rear end of the fuselage, an inner propeller drive shaft (58) on which the first propeller (20) is mounted, and a hollow outer propeller drive shaft (65) on which the second propeller (21) is mounted and through which the inner drive shaft (58) passes in concentric relation therewith, first and second engines (22,23), a first drive train (53,53$^1$,25,54) which transmits drive from the first engine (22) to the inner propeller drive shaft (58) to produce rotation of the first propeller (20) and a second drive train (60,60$^1$,60$^{11}$,26,61) which transmits drive from the second engine (23) to the outer propeller drive shaft (65) to produce rotation of the second propeller (21), each drive train having no drive connection or engageable drive connection with the other drive train whereby the drive transmitted by each drive train is unaffected by the drive or absence of drive in the other drive train, characterised in that the first and second engines (22,23) are mounted side-by-side or one above the other within the fuselage at the rear end thereof, each drive train is segregated from the other drive train to protect each drive train from damage in the event of failure of the other drive train, and the system further comprises an inner drive shaft support structure (72) which rotatably supports the inner propeller drive shaft (58) and which extends between the hollow outer propeller drive shaft (65) and the inner propeller drive shaft (58) to protect each drive shaft from damage in the event of a failure of the other drive shaft, and an outer drive shaft support structure (77) which rotatably supports the outer propeller drive shaft (65) independently of the inner propeller drive shaft (58) and the inner drive shaft support structure (72).

2. A system according to claim 1, characterised in that the inner drive shaft support structure (72) comprises a sleeve (72) which extends concentrically within the hollow outer drive shaft (65) to a rear end thereof, and that bearings (71) are provided on the sleeve (72) at the rear end thereof to rotatably support the rearward end of the inner drive shaft (58).

3. A system according to claim 2, characterised in that the inner drive shaft support structure (72) includes bearings (70) which support the forward end of the inner drive shaft (58).

4. A system according to claim 1, 2 or 3, characterised in that the outer drive shaft support structure (77) includes an outer sleeve through which the outer propeller drive shaft (65) passes and which carries forward and rearward bearings (75,76) for support of the outer drive shaft.

5. A system according to any of claims 1 to 4, characterised by the provision of a protective barrier between the two engines to protect each engine from damage caused by failure of the other engine.

6. An aircraft having a fuselage and lift generating surfaces and including a propulsion system according to any of the preceding claims.


**Revendications**

1. Système de propulsion pour un aéronef possédant un fuselage et des surfaces génératrices de portance, dans lequel le système comprend une première et une deuxième hélices coaxiales (20, 21) montées pour tourner sur l'extrémité arrière du fuselage, un arbre moteur d'hélice intérieur (58), sur lequel la première hélice (20) est montée et un arbre moteur d'hélice extérieur creux (65), sur lequel la deuxième hélice (21) est montée et dans lequel l'arbre moteur intérieur (58) passe concentriquement, un premier et un deuxième moteurs (22, 23), une première chaîne cinématique (53, 53', 25, 54) qui transmet le mouvement du premier moteur (22) à l'arbre moteur d'hélice intérieur (58), pour produire la rotation de la première hélice (20), et une deuxième chaîne cinématique (60, 60', 60", 26, 61) qui transmet le mouvement du deuxième moteur (23) à l'arbre moteur d'hélice extérieur (65), pour produire la rotation de la deuxième hélice (21), chaque chaîne cinématique étant dépourvue de toute liaison cinématique, même embrayable, avec l'autre chaîne cinématique, de sorte que le mouvement transmis par chaque chaîne cinématique reste inaffecté par le mouvement ou l'absence de mouvement transmis dans l'autre chaîne cinématique, caractérisé en ce que le premier et le deuxième moteurs (22, 23) sont montés côte à côte ou l'un au-dessus de l'autre à l'intérieur du fuselage, à l'extrémité arrière de celui-ci, chaque chaîne cinématique est séparée de l'autre chaîne cinématique pour protéger chaque chaîne cinématique des détériorations dans le cas de défaillance de l'autre chaîne cinématique, et le système comprend en outre une structure support (72) d'arbre moteur intérieur, qui supporte l'arbre moteur d'hélice intérieur (58) libre en rotation, et qui s'étend entre l'arbre moteur d'hélice extérieur creux (65) et l'arbre moteur d'hélice intérieur (58) pour protéger chaque arbre moteur des détériorations en cas de défaillance de l'autre arbre moteur, et une structure support (77) d'arbre moteur extérieur qui supporte l'arbre moteur d'hélice extérieur (65) libre en rotation, indépendamment de l'arbre moteur d'hélice intérieur (58) et de la structure (72) support d'arbre moteur intérieur.

2. Système selon la revendication 1, caractérisé en ce que la structure support (72) d'arbre moteur intérieur comprend un fourreau (72) qui s'étend concentriquement à l'intérieur de l'arbre moteur extérieur creux (65) jusqu'à l'extrémité arrière de celui-ci, et en ce que des paliers (71) sont prévus sur le fourreau (72), à son extrémité arrière, pour supporter l'extrémité arrière de l'arbre moteur intérieur (58) libre en rotation.

3. Système selon la revendication 2, caractérisé en ce que la structure support (72) d'arbre moteur intérieur comprend des paliers (70) qui supportent l'extrémité avant de l'arbre moteur intérieur (58).

4. Système selon la revendication 1, 2 ou 3, caractérisé en ce que la structure support (77) d'arbre moteur extérieur comprend un fourreau extérieur dans lequel passe l'arbre d'hélice extérieur (65) et qui porte des paliers avant et arrière (75, 76) pour supporter l'arbre moteur extérieur.

5. Système selon une quelconque des revendications 1 à 4, caractérisé par la présence d'une barrière protectrice entre les deux moteurs, pour protéger chaque moteur des détériorations provoquées par la défaillance de l'autre moteur.

6. Avion possédant un fuselage et des surfaces génératrices de portance et comprenant un système de propulsion selon une quelconque des revendications précédentes.


**Ansprüche**

1. Antriebssystem für ein Luftfahrzeug (Flugzeug), das einen Rumpf und auftriebserzeugende Flächen aufweist, wobei das System enthält: in koaxialer Anordnung einen ersten und einen zweiten Propeller (20,21), die drehbar an dem hinteren Ende des Rumpfes gelagert sind; eine innere Propellerantriebswelle (58), an der der erste Propeller (20) befestigt ist; und eine hohle äußere Propellerantriebswelle (65), an der der zweite Propeller (2l) befestigt ist und durch die die innere Propellerantriebswelle (58) zu ihr konzentrisch hindurchführt; einen ersten und einen zweiten Motor (22,23); ein erstes Antriebsvorgelege (53,53',25,54), das, um die Drehung des ersten Propellers (20) zu erzeugen, die Antriebsenergie von dem ersten Motor (22) zu der inneren Propellerantriebswelle (58) überträgt, sowie ein zweites Antriebsvorgelege (60, 60', 60", 26, 61), das, um die Drehung des zweiten Propellers (21) zu erzeugen, die Antriebsenergie von dem zweiten Motor (23) zu der äußeren Propellerantriebswelle (65) überträgt, wobei die Antriebsvorgelege keine Antriebsverbindung oder einkuppelbare Antriebsverbindung untereinander haben, wodurch die Antriebsenergie, die von jedem Antriebsvorgelege übertragen wird, von der Antriebsenergie in dem anderen Antriebsvorgelege oder von dem Fehlen der Antriebsenergie in dem anderen Antriebsvorgelege unbeeinflußt ist, dadurch gekennzeichnet, daß der erste und der zweite Motor (22,23) nebeneinander oder übereinander im Inneren des Rumpfes am hinteren Ende desselben befestigt sind, daß jedes Antriebsvorgelege von dem jeweils anderen Antriebsvorgelege getrennt ist, um bei Ausfall des jeweils anderen Antriebsvorgeleges das jeweilige Antriebsvorgelege vor Beschädigung zu schützen, und daß das System ferner für die innere Propellerantriebswelle (58) eine Lagereinrichtung (72), die die innere Propellerantriebswelle (58) drehbar lagert und sich zwischen der hohlen äußeren Propellerantriebswelle (65) sowie der inneren Propellerantriebswelle (58) erstreckt, damit jede der Antriebswellen vor Beschädigung bei Ausfall der jeweils anderen Antriebswelle geschützt ist, sowie für die äußere Antriebswelle eine Lagereinrichtung (77) aufweist, die die äußere Propellerantriebswelle (65) unabhängig von der inneren Propellerantriebswelle (58) und der Lagereinrichtung (72) für die innere Antriebswelle drehbar lagert.

2. Antriebssystem gemäß Anspruch 1, dadurch gekennzeichnet, daß die Lagereinrichtung (72) für die innere Antriebswelle ein Rohr (72) aufweist, das sich konzentrisch zwischen der hohlen äußeren Propellerantriebswelle (65) zu einem hinteren Ende derselben erstreckt, und daß, um das hintere Ende der inneren Propellerantriebswelle (58) drehbar zu lagern, an dem hinteren Ende des Rohres (72) Lager (71) vorgesehen sind.

3. Antriebssystem gemäß Anspruch 2, dadurch gekennzeichnet, daß die Lagereinrichtung (72) für die innere Antriebswelle Lager (70) aufweist, die das vordere Ende der inneren Antriebswelle lagern.

4. Antriebssystem gemäß den Ansprüchen 1, 2 oder 3, dadurch gekennzeichnet, daß die Lagereinrichtung (77) für die äußere Antriebswelle ein äußeres Rohr aufweist, durch das die äußere Propellerantriebswelle (65) hindurchgeht und das vordere und hintere Lager (75,76) zur Lagerung der äußeren Antriebswelle trägt.

5. Antriebssystem gemäß den Ansprüchen 1 bis 4, dadurch gekennzeichnet, daß eine Schutzbarriere zwischen den beiden Motoren vorgesehen ist, um den jeweiligen Motor vor Beschädigung in Folge eines Ausfalls des jeweils anderen Motors zu schützen.

6. Luftfahrzeug (Flugzeug) mit Rumpf und auftriebserzeugenden Flächen, das ein Antriebssystem aufweist, gekennzeichnet durch einige der voranstehenden Ansprüche.

FIG. 1.

*FIG.2.*

*FIG.4.*

*FIG.5.*

FIG. 3.

EP 0 272 822 B1

Fig.6.

FIG. 7.

EP 0 272 822 B1